# EUROPÄISCHE PATENTSCHRIFT

(11) **EP 2 439 090 B1**
(45) Veröffentlichungstag und Bekanntmachung des Hinweises auf die Patenterteilung: **31.07.2013**
(21) Anmeldenummer: 11007508.2
(22) Anmeldetag: 14.09.2011
(51) Int. Cl.: B60H 1/34

(54) **Bedienelement für einen Luftausströmer**
Operating component for an air vent
Elément de commande pour une buse d'aération

(30) Priorität: 07.10.2010 DE 102010047817
(43) Veröffentlichungstag der Anmeldung: 11.04.2012
(73) Patentinhaber: TRW Automotive Electronics & Components GmbH, 78315 Radolfzell (DE)
(72) Erfinder: Kober, Steve, 08233 Treuen (DE); Lottes, Werner, 95632 Wunsiedel (DE)
(74) Vertreter: Prinz & Partner

(56) Entgegenhaltungen:
- DE-U1-202006 009 088
- US-A1- 2006 014 485
- US-A1- 2007 111 653
- US-A1- 2009 137 200

## Beschreibung

Die Erfindung betrifft ein Bedienelement für einen Luftausströmer, insbesondere in Kraftfahrzeugen.

Aus dem Stand der Technik sind diverse Ausführungen von Bedienelementen für Luftausströmer bekannt. Häufig sind diese Bedienelemente mehrteilig gestaltet. Sie können z. B. knopfartig ausgebildet sein und ein separates Federelement aufweisen, das die zum Verstellen erforderliche Kraft bestimmt. Es sind aber auch bereits Bedienelemente für Luftausströmer bekannt, bei denen das Federelement in das Bedienelement integriert ist.

Bei solchen Bedienelementen drückt das Federelement meist direkt auf die Lamelle, wodurch bei einer höheren geforderten Verstellkraft des Bedienelements das Federelement entsprechend stark belastet werden muss. Dadurch bedingt kann es bei hohen Temperaturen zum Kriechen des Werkstoffs kommen, wodurch über die Lebensdauer die Bedienkräfte entsprechend abnehmen. Dies wirkt sich negativ auf ein feinfühliges Verstellen aus.

Allgemein sind solche Bedienelemente vor allem dann aufwändig in ihrer Herstellung, wenn das Federelement für die bedienende Person nicht sichtbar sein soll.

In der US 2009/0137200 A1 ist ein Luftausströmer mit einem Bedienelement gezeigt, das ein U-förmiges Profil hat und auf der dem Fahrzeuginsassen abgewandten Seite offen ist, sodass zur Befestigung des Bedienelements auf einer Lamelle letztere mit ihrer ausströmseitigen Kante voran in das Bedienelement eingeführt werden kann.

Ein Bedienelement für einen Luftausströmer mit den Merkmalen des Oberbegriffs des Anspruchs 1 ist aus der US 2006/0014485 A1 bekannt. Dieses Bedienelement weist ein integriertes Federelement auf, das zwischen dem Bedienelement und der dem Fahrzeuginsassen zugewandten Kante einer Lamelle wirkt. Das Federelement drückt die Lamelle gegen zwei Vorsprünge auf der vom Fahrzeuginsassen abgewandten Seite des geschlossenen Durchgangs für die Lamelle. Dadurch wird eine Reibungskraft erzeugt, die das Bedienelement in der jeweiligen vom Benutzer eingestellten Position hält. Zur Begrenzung des Verstellwegs des Bedienelements in Längsrichtung der Lamelle sind auf dieser zwei Endanschläge vorgesehen, gegen die jeweils eine am Rand des Durchgangs gebildete Lasche bei entsprechender Verschiebung des Bedienelements anstößt. Damit das Bedienelement auf die Lamelle von einer Stirnseite her aufgeschoben werden kann, hat einer der Endanschläge die Form einer Rampe, und die Laschen sind federnd ausgebildet, sodass sie in der Montagerichtung über diesen Endanschlag gleiten können.

Es ist Aufgabe der Erfindung, ein Bedienelement mit integriertem Federelement zur Verfügung zu stellen, wobei das Federelement für die bedienende Person möglichst nicht sichtbar sein soll, das Bedienelement einfach und kostengünstig hergestellt werden kann, und die Verstellkräfte des Bedienelements über der Lebensdauer annähernd konstant bleiben.

Gelöst wird diese Aufgabe durch ein Bedienelement mit den Merkmalen des Anspruchs 1 sowie durch eine Baugruppe aus einer Lamelle und einem Bedienelement mit den Merkmalen des Anspruchs 7. Vorteilhafte und zweckmäßige Ausgestaltungen des erfindungsgemäßen Bedienelements und der erfindungsgemäßen Baugruppe sind in den zugehörigen Unteransprüchen angegeben.

Das erfindungsgemäße Bedienelement für einen Luftausströmer umfasst einen flachen Durchgang von einer ersten Seite zu einer entgegengesetzten zweiten Seite für eine Lamelle. Der Durchgang ist wenigstens auf einer Seite durch einen rahmenförmigen Seitenabschnitt begrenzt, der einen Schlitz aufweist. Wenigstens ein Teil des Seitenabschnitts ist elastisch auslenkbar.

Gemäß der Erfindung verläuft der Schlitz im rahmenförmigen Seitenabschnitt quer zur Lamellenlängsrichtung und parallel zur Lamellenebene. Diese Art der Anordnung sorgt für optimal gerichtete Haltekräfte, die ein kontrolliertes Verschieben des Bedienelements auf der Lamelle in deren Längsrichtung erlauben. Zu hohe Verstellkräfte bei etwaigem Verkanten oder nicht exaktem Führen des Bedienelements auf der Lamelle können durch den Schlitz ausgeglichen werden.

Mit der erfindungsgemäßen Gestaltung des Bedienelements wirkt bei einer geeigneten Auslegung nach dem Aufschieben des Bedienelements auf die Lamelle (ein üblicher Montageschritt) aufgrund der elastischen Auslenkung des Seitenabschnitts eine Federkraft auf die Lamelle, ohne dass hierfür eine Feder als separates Bauteil benötigt wird. Das Bedienelement wird durch die Federkraft auf der Lamelle gehalten und behält eine gewünschte Position auf der Lamelle auch bei Erschütterungen zuverlässig bei. Da das Bedienelement kein separates Federelement aufweist, wird vorteilhafterweise auch sein optischer Eindruck nicht durch eine solches beeinträchtigt. Ist der Schlitz im Bedienelement auf der von der bedienenden Person abgewandten Seite angeordnet, so ist für den Bediener auch der Schlitz nicht sichtbar. Grundsätzlich kann der Schlitz aber auch auf der dem Bediener zugewandten Seite angeordnet sein.

Die Innenkontur des Bedienelements weist vorzugsweise ein auf die Außenkontur der Lamelle angepasstes Profil mit wenigstens einer Erhöhung oder Vertiefung auf. Da das Bedienelement für eine Lamelle bestimmt ist, ist es vorteilhaft, dass die jeweilige Innen- und Außenkontur aufeinander abgestimmt sind. Ein Profil mit wenigstens einer Erhöhung oder Vertiefung hat im Vergleich zu völlig glatten Oberflächen den Vorteil, dass das Bedienelement dadurch auf der Lamelle geführt werden kann.

Gemäß einem besonderen Aspekt der Erfindung weist die Innenkontur des Bedienelements entlang des Durchgangs in Durchgangsrichtung eine Nut oder einen keilförmigen Fortsatz auf. Diese definierte Geometrie ermöglicht eine optimale Führung der Lamelle auf einer entsprechend gestalteten Lamelle. Grundsätzlich sind aber auch andere Geometrien von Innenkontur des Bedienelements und Außenkontur der Lamelle denkbar. Wesentlich dabei ist, dass die Innenkontur des Bedienelements auf die Außenkontur der Lamelle abgestimmt ist.

In einer besonders bevorzugten Ausführungsform weist die Nut bzw. der keilförmige Fortsatz sich gegenüberliegende, geneigte Seitenwände auf, welche einen Neigungswinkel < 90° ausbilden. Über die Größe des Neigungswinkels lässt sich die Vorspannkraft einstellen, die auf die Seitenwände wirkt. Diese Vorspannkraft nimmt mit abnehmender Neigung zu, sodass bei entsprechender Auslegung nur eine sehr geringe elastische Auslenkung des Seitenabschnitts für die insgesamt geforderte Vorspannkraft erforderlich ist. Dadurch wird einem Kriechen des Kunststoffs effektiv entgegengewirkt. Außerdem haben geneigte Seitenwände den Vorteil einer vereinfachten, selbstjustierenden Montage des Bedienelements auf der Lamelle, und sie sorgen für eine Fixierung des Bedienelements auf der Lamelle quer zu deren Längsrichtung. Die Neigungswinkel der Seitenwände können in einem Bedienelement gleich oder unterschiedlich groß sein.

Als günstig haben sich eine Nut bzw. ein keilförmiger Fortsatz herausgestellt, die einen im Wesentlichen trapezförmigen Querschnitt aufweisen. Die Abflachung trägt zur Stabilität der Verbindung von Bedienelement und Lamelle bei, weil dadurch eine Auflagefläche an Stelle einer Linie zur Verfügung steht, was sich auch günstig in Bezug auf den Verschleiß auswirkt.

Weiter vorzugsweise ist das Bedienelement einstückig aus einem Kunststoff ausgebildet. Die reduzierte Teilezahl wirkt sich vorteilhaft auf die Logistik und die Montage aus, wodurch die entsprechenden Kosten und der Zeitaufwand reduziert werden können. Außerdem kann das Bedienelement aus Kunststoff in einem kostengünstigen Spritzgussverfahren hergestellt werden, das hinsichtlich der Formgebung viele Freiheiten lässt.

Außerdem wird durch die Erfindung eine Baugruppe aus einer Lamelle und einem erfindungsgemäßen Bedienelement für einen Luftausströmer zur Verfügung gestellt.

Gemäß einer bevorzugten Ausführungsform der erfindungsgemäßen Baugruppe weist die Innenkontur des Bedienelements ein Profil mit wenigstens einer Erhöhung oder Vertiefung und die Außenkontur der Lamelle ein Profil mit einer daran angepassten Vertiefung bzw. Erhöhung auf, sodass die Erhöhung in die Vertiefung hineinragt. Dadurch dass das Bedienelement und die Lamelle über ineinander greifende Konturen verfügen, ist eine optimale Führung und ein problemloses Verstellen des Bedienelements auf der Lamelle gewährleistet. Es spielt dabei keine Rolle auf welchem Bauteil die Nut und auf welchem Bauteil der keilförmige Fortsatz angeordnet ist.

Vorzugsweise sind die Konturen so ausgebildet, dass ein sich entlang des Durchgangs des Bedienelements in Durchgangsrichtung erstreckender keilförmiger Fortsatz in eine sich entlang der Lamelle in Lamellenlängsrichtung erstreckende Nut eingreift, bzw. ein sich entlang der Lamelle in Lamellenlängsrichtung erstreckender keilförmiger Fortsatz in eine sich entlang des Durchgangs des Bedienelements in Durchgangsrichtung erstreckende Nut eingreift.

Vorteilhafterweise ist die Außenkontur der Lamelle im Vergleich zur Innenkontur des Bedienelements mit Übermaß gefertigt. Diese Maßnahme führt zu einer erwünschten Reibung zwischen dem Bedienelement und der Lamelle. Auf diese Weise lässt sich die Verstellkraft, die zum Verschieben des Bedienelements auf der Lamelle notwendig ist, gezielt beeinflussen. Das hat zur Folge, dass die zum Verstellen des Bedienelements benötigten Kräfte über die Lebensdauer annähernd konstant bleiben und nicht abnehmen. Außerdem bleibt so eine gewünschte Position des Bedienelements auf der Lamelle stabil erhalten und verändert sich nicht etwa schon durch leichte Erschütterungen, wie sie in einer Fahrzeugumgebung erwartungsgemäß auftreten können.

Es ist besonders günstig, wenn das Bedienelement auf der Lamelle in beiden Richtungen quer zur Lamellenlängsrichtung lagefest und in Lamellenlängsrichtung geführt verschiebbar angeordnet ist. Dadurch erhält die Baugruppe aus Bedienelement und Lamelle große Stabilität. Das Bedienelement kann nicht auf der Lamelle verrutschen und das Bedienelement ist dadurch feinfühlig verstellbar.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine perspektivische Hinteransicht eines erfindungsgemäßen Bedienelements mit einer transparent dargestellten Lamelle;
- Figur 2 eine Hinteransicht des Bedienelements mit der Lamelle quer zur Durchgangsrichtung;
- Figur 3 eine Seitenansicht des Bedienelements mit geschnittener Lamelle;
- Figur 4 eine Vergrößerung des Details X aus Figur 3; und
- Figur 5 ein Diagramm der Vorspannkraft in Abhängigkeit des Neigungswinkels.

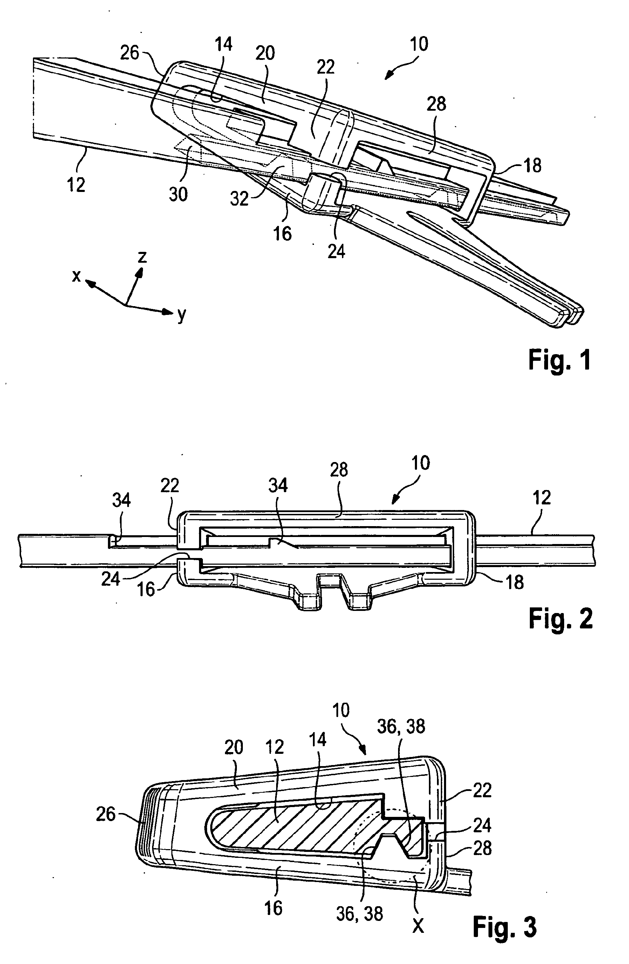

In Figur 1 ist ein vollständig aus Kunststoff gefertigtes Bedienelement 10 für einen Luftausströmer dargestellt, das auf einer Lamelle 12 angeordnet ist. Das Bedienelement 10 weist einen flachen Durchgang 14 von einer ersten Seite 16 zu einer entgegengesetzten zweiten Seite 18 auf. Der Durchgang 14 wird wenigstens auf einer Seite durch einen rahmenförmigen Seitenabschnitt 20 begrenzt.

In einem Teil 22 des Seitenabschnitts 20 ist ein Schlitz 24 gebildet. Der Schlitz 24 verläuft quer zur Lamellenlängsrichtung y und parallel zur Lamellenebene, die durch die Richtungen x und y bestimmt ist. Das Bedienelement 10 ist annähernd quaderförmig gestaltet mit einer geschlossenen Vorderseite 26, die der bedienenden Person zugewandt ist, und einer offene Rückseite 28, die von der bedienenden Person abgewandt ist, wobei die Höhe (in z-Richtung) des Bedienelements 10 zur Rückseite 28 hin zunimmt. Die Begriffe "Vorderseite" und "Rückseite" sind selbstverständlich nicht einschränkend zu verstehen.

Die Außenkontur der Lamelle 12 weist eine Vertiefung in Form von einer sich in deren Längsrichtung y erstreckenden Nut 30 auf. In die Nut 30 greift wenigstens eine Erhöhung in Form eines keilartigen Fortsatzes 32 ein, der Teil der Innenkontur des Bedienelements 10 ist und sich wenigstens teilweise entlang des Durchgangs 14 in dessen Durchgangsrichtung y erstreckt. Es ist auch eine umgekehrte Anordnung von Nut 30 und keilförmigem Fortsatz 32 möglich, d. h. die Nut 30 kann auch Teil der Innenkontur des Bedienelements 10 sein, und der keilförmige Fortsatz 32 kann von der Lamelle 12 hervorstehen.

Wie in Figur 2 zu erkennen ist, sind auf der Lamelle 12 Stopper 34 gebildet, die den Verstellweg des Bedienelements 10 in y-Richtung begrenzen, indem sie dem rahmenförmigen Seitenabschnitt 20 als Anschläge dienen. Die Lamelle 12 durchragt das Bedienelement 10 von der ersten Seite 16 zur zweiten Seite 18.

Figur 3 zeigt die Innenkontur des Bedienelements 10 und die (geschnitten dargestellte) Außenkontur der Lamelle 12. Der rahmenförmige Seitenabschnitt 20 begrenzt den flachen Durchgang 14 des Bedienelements 10. Der quer zur Lamellenlängsrichtung y und parallel zur Lamellenebene verlaufende Schlitz 24 erlaubt eine elastische Auslenkung wenigstens des Teils 22 des rahmenförmigen Seitenabschnitts 20 in z-Richtung. Außerdem ist zu erkennen, wie der keilförmige Fortsatz 32 des Bedienelements 10 in die Nut 30 der Lamelle 12 eingreift. Sowohl die Nut 30 als auch der keilförmige Fortsatz 32 weisen einen im Wesentlichen trapezförmigen Querschnitt mit sich gegenüberliegenden, geneigten Seitenwänden 36 bzw. 38 auf.

Das Bedienelement 10 wird auf die Lamelle 12 geschoben und ist auf dieser in Lamellenlängsrichtung y verschiebbar. Die Bewegung ist durch die oben beschriebene Keil-Nut-Konstruktion geführt. Dadurch, dass die Außenkontur der Lamelle 12 bezogen auf die Innenkontur des Bedienelements 10 mit Übermaß gefertigt ist und der Schlitz 24 eine elastische Auslenkung des rahmenförmigen Seitenabschnitts 20 ermöglicht, wirkt zwischen dem Bedienelement 10 und der Lamelle 12 eine Vorspannkraft, die ohne Verwendung eines zusätzlichen Federelements zustande kommt. Die in z-Richtung, also senkrecht zur Lamellenebene wirkende Kraft hält das Bedienelement auf der Lamelle 12, sodass eine gewünschte Position des Bedienelements 10 auf der Lamelle 12 stabil eingestellt werden kann und diese Position auch zuverlässig beibehalten wird.

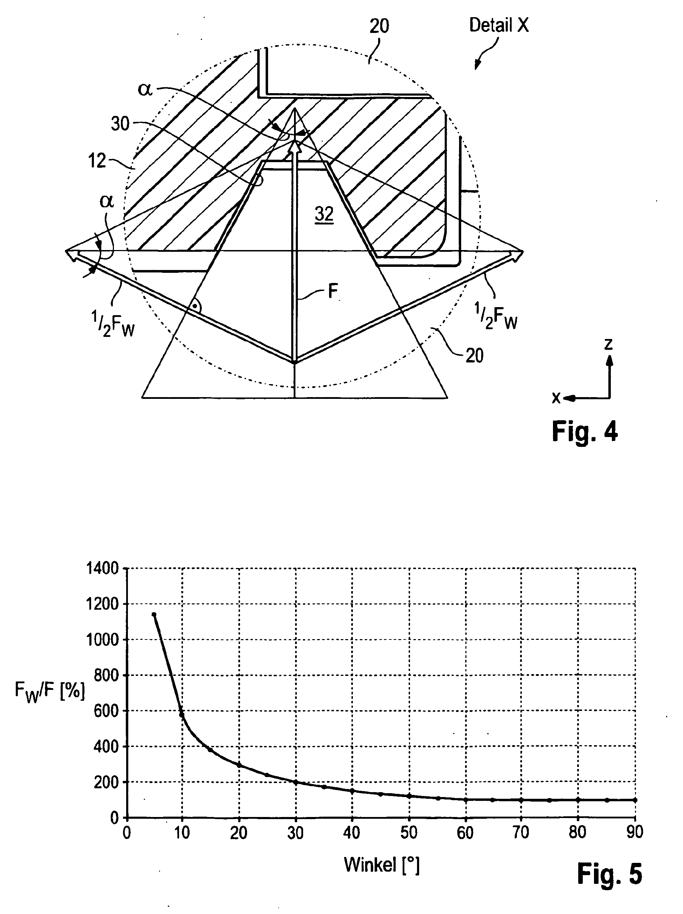

In der vergrößerten Darstellung der Figur 4 ist verdeutlicht, wie die Anteile ½ F_{w} der Vorspannkraft F in Abhängigkeit der Neigung auf die Seitenwände 36, 38 der Nut 30 bzw. des keilförmigen Fortsatzes 32 wirken. Somit können die Teilkräfte, die auf die Seitenwände 36, 38 wirken und den Widerstand des Bedienelements 10 auf der Lamelle 12 bzw. die für die Verschiebung aufzubringende Verstellkraft bestimmen, über den Neigungswinkel α eingestellt werden. Als Neigungswinkel α ist der spitze Winkel (< 90°) zwischen der z-Richtung und den Seitenwänden 36, 38 zu verstehen.

In Figur 5 ist für das in den Figuren 1 bis 4 gezeigte Ausführungsbeispiel das prozentuale Verhältnis der beiden geneigten Teilkräfte zur senkrecht auf die Lamelle wirkenden Vorspannkraft Fw/F in Abhängigkeit vom Neigungswinkel α in einem Diagramm dargestellt. Je kleiner der Neigungswinkel α ist, umso größer sind die auf die Seitenwände 36, 38 wirkenden Teilkräfte. Ein vergleichbares Diagramm ergibt sich auch bei einer umgekehrten Anordnung von Nut 30 und keilförmigem Fortsatz 32.

Die Neigungswinkel α der einzelnen Seitenwände 36, 38 können gleich oder wenigstens teilweise unterschiedlich groß sein.

Eine weitere Stabilisierung der Anordnung von Bedienelement 10 und Lamelle 12 wird dadurch erreicht, dass die Nut 30 und der keilförmige Fortsatz 32 einen trapezförmigen Querschnitt aufweisen, was insgesamt zu einer vergrößerten Berührfläche führt. Auch durch diese Geometrie werden die Reibungskräfte zwischen den bewegten Teilen erhöht.

Das Bedienelement 10 ist aufgrund der oben beschriebenen Geometrie auf der Lamelle nur in Lamellenlängsrichtung y verschiebbar, nicht aber in den beiden anderen Raumrichtungen x und z quer dazu.

### Bezugszeichenliste

- 10: Bedienelement
- 12: Lamelle
- 14: Durchgang
- 16: erste Seite
- 18: zweite Seite
- 20: rahmenförmiger Seitenabschnitt
- 22: Teil des Seitenabschnitts
- 24: Schlitz
- 26: Vorderseite
- 28: Rückseite
- 30: Nut
- 32: keilförmiger Fortsatz
- 34: Stoppelemente
- 36: Seitenwände der Nut
- 36: Seitenwände des keilförmigen Fortsatzes

## Patentansprüche

1. Bedienelement (10) für einen Luftausströmer, mit einem flachen Durchgang (14) von einer ersten Seite (16) zu einer entgegengesetzten zweiten Seite (18) für eine Lamelle (12), wobei der Durchgang (14) wenigstens auf einer Seite durch einen rahmenförmigen Seitenabschnitt (20), der einen Schlitz aufweist (24), begrenzt ist, so dass wenigstens ein Teil (22) des Seitenabschnitts (20) elastisch auslenkbar ist, **dadurch gekennzeichnet, dass** der Schlitz (24) im rahmenförmigen Seitenabschnitt (20) quer zur Lamellenlängsrichtung und parallel zur Lamellenebene verläuft.

2. Bedienelement (10) für einen Luftausströmer nach Anspruch 1, **dadurch gekennzeichnet, dass** die Innenkontur des Bedienelements (10) ein auf die Außenkontur der Lamelle (12) angepasstes Profil mit wenigstens einer Erhöhung oder Vertiefung aufweist.

3. Bedienelement (10) für einen Luftausströmer nach Anspruch 2, **dadurch gekennzeichnet, dass** die Innenkontur des Bedienelements (10) entlang des Durchgangs (14) in Durchgangsrichtung eine Nut (30) oder einen keilförmigen Fortsatz (32) aufweist.

4. Bedienelement (10) für einen Luftausströmer nach Anspruch 3, **dadurch gekennzeichnet, dass** die Nut (30) bzw. der keilförmige Fortsatz (32) sich gegenüberliegende, geneigte Seitenwände (36, 38) aufweist, welche einen Neigungswinkel < 90° ausbilden.

5. Bedienelement (10) für einen Luftausströmer nach Anspruch 3 oder 4, **dadurch gekennzeichnet, dass** die Nut (30) bzw. der keilförmige Fortsatz (30) einen im Wesentlichen trapezförmigen Querschnitt aufweisen.

6. Bedienelement (10) für einen Luftausströmer nach einem der vorhergehenden Ansprüche, **dadurch gekennzeichnet, dass** das Bedienelement (10) einstückig aus einem Kunststoff ausgebildet ist.

7. Baugruppe aus einer Lamelle (12) und einem Bedienelement (10) für einen Luftausströmer nach einem der vorhergehenden Ansprüche, **dadurch gekennzeichnet, dass** die Innenkontur des Bedienelements (10) ein Profil mit wenigstens einer Erhöhung oder Vertiefung und die Außenkontur der Lamelle (12) ein Profil mit einer daran angepassten Vertiefung bzw. Erhöhung aufweist, sodass die Erhöhung in die Vertiefung hineinragt.

8. Baugruppe nach Anspruch 7, **dadurch gekennzeichnet, dass** ein sich entlang des Durchgangs (14) des Bedienelements (10) in Durchgangsrichtung erstreckender keilförmiger Fortsatz (32) in eine sich entlang der Lamelle (12) in Lamellenlängsrichtung erstreckende Nut (30) eingreift, bzw. ein sich entlang der Lamelle (12) in Lamellenlängsrichtung erstreckender keilförmiger Fortsatz (32) in eine sich entlang des Durchgangs (14) des Bedienelements (10) in Durchgangsrichtung erstreckende Nut (30) eingreift.

9. Baugruppe nach Anspruch 7 oder 8, **dadurch gekennzeichnet, dass** die Außenkontur der Lamelle (12) im Vergleich zur Innenkontur des Bedienelements (10) mit Übermaß gefertigt ist.

10. Baugruppe nach einem der Ansprüche 7 bis 9, **dadurch gekennzeichnet, dass** das Bedienelement auf der Lamelle (12) in beiden Richtungen quer zur Lamellenlängsrichtung lagefest und in Lamellenlängsrichtung geführt verschiebbar angeordnet ist.

## Claims

1. An operating element (10) for an air vent, comprising a flat passage (14) from a first side (16) to an opposite second side (18) for a blade (12), the passage (14) being limited at least on one side by a frame-shaped lateral portion (20) comprising a slit (24), so that at least a part (22) of the lateral portion (20) can be deflected elastically, **characterized in that** the slit (24) in the frame-shaped lateral portion (20) extends transversely to the longitudinal direction of the blade and parallel to the plane of the blade.

2. The operating element (10) for an air vent according to claim 1, **characterized in that** the inner contour of the operating element (10) has a profile adapted to the outer contour of the blade (12) and having at least one protuberance or depression.

3. The operating element (10) for an air vent according to claim 2, **characterized in that** the inner contour of the operating element (10) has a groove (30) or a wedge-shaped protrusion (32) along the passage (14) in the direction of the passage.

4. The operating element (10) for an air vent according to claim 3, **characterized in that** the groove (30) and the wedge-shaped protrusion (32) comprise opposing, inclined side walls (36, 38) defining an inclination angle < 90°.

5. The operating element (10) for an air vent according to claim 3 or 4, **characterized in that** the groove (30) and the wedge-shaped protrusion (30) have an essentially trapezoidal cross-section.

6. The operating element (10) for an air vent according to any of the preceding claims, **characterized in that** the operating element (10) is made in one piece of a plastic material.

7. An assembly made up of a blade (12) and an operating element (10) for an air vent according to any of the preceding claims, **characterized in that** the inner contour of the operating element (10) has a profile with at least one protuberance or depression and the outer contour of the blade (12) has a profile with a depression or protuberance adapted thereto, respectively, so that the protuberance projects into the depression.

8. The assembly according to claim 7, **characterized in that** a wedge-shaped protrusion (32) extending along the passage (14) of the operating element (10) in the direction of the passage engages a groove (30) extending along the blade (12) in the longitudinal direction of the blade, or a wedge-shaped protrusion (32) extending along the blade (12) in the longitudinal direction of the blade engages a groove (30) extending along the passage (14) of the operating element (10) in the direction of the passage.

9. The assembly according to claim 7 or 8, **characterized in that** the outer contour of the blade (12) is manufactured with an oversize compared to the inner contour of the operating element (10).

10. The assembly according to any of the claims 7 to 9, **characterized in that** the operating element is arranged on the blade (12) so as to be stationary in both directions transverse to the longitudinal direction of the blade and so as to be movable in a guided manner in the longitudinal direction of the blade.

## Revendications

1. Elément de manoeuvre (10) pour un diffuseur d'air, comportant un passage plat (14) allant depuis un premier côté (16) vers un second côté (18) opposé pour une lamelle (12), le passage (14) étant délimité au moins sur un côté par une portion latérale (20) en forme de cadre comprenant une fente (24), de telle sorte qu'une partie (22) au moins de la portion latérale (20) est capable de dévier élastiquement, **caractérisé en ce que** la fente (24) dans la portion latérale (20) en forme de cadre s'étend transversalement à la direction longitudinale de la lamelle et parallèlement au plan de la lamelle.

2. Elément de manoeuvre (10) pour un diffuseur d'air selon la revendication 1, **caractérisé en ce que** le contour intérieur de l'élément de manoeuvre (10) présente un profil adapté au contour extérieur de la lamelle (12) et pourvu d'au moins un bossage ou creux.

3. Elément de manoeuvre (10) pour un diffuseur d'air selon la revendication 2, **caractérisé en ce que** le contour intérieur de l'élément de manoeuvre (10) le long un passage (14) présente une gorge (30) ou un prolongement (32) en forme de coin dans la direction du passage.

4. Elément de manoeuvre (10) pour un diffuseur d'air selon la revendication 3, **caractérisé en ce que** la gorge (30) ou le prolongement (32) en forme de coin présente des parois latérales (36, 38) inclinées opposées qui définissent un angle d'inclinaison < 90°.

5. Elément de manoeuvre (10) pour un diffuseur d'air selon la revendication 3 ou 4, **caractérisé en ce que** la gorge (30) ou le prolongement en forme de coin (30) présente une section transversale sensiblement en forme trapézoïdale.

6. Elément de manoeuvre (10) pour un diffuseur d'air selon l'une des revendications précédentes, **caractérisé en ce que** l'élément de manoeuvre (10) est réalisé d'un seul tenant en matière plastique.

7. Ensemble structurel d'une lamelle (12) et d'un élément de manoeuvre (10) pour un diffuseur d'air selon l'une des revendications précédentes, **caractérisé en ce que** le contour intérieur de l'élément de manoeuvre (10) présente un profil pourvu d'au moins un bossage ou creux, et le contour extérieur de la lamelle (12) présente un profil pourvu d'un creux ou bossage adapté, de telle sorte que le bossage pénètre dans le creux.

8. Ensemble structurel selon la revendication 7, **caractérisé en ce qu'**un prolongement (32) en forme de coin qui s'étend le long du passage (14) de l'élément de manoeuvre (10) en direction de passage vient s'engager dans une gorge (30) qui s'étend le long de la lamelle (12) en direction longitudinale de la lamelle, ou un prolongement (32) en forme de coin qui s'étend le long de la lamelle (12) en direction longitudinale de la lamelle vient s'engager dans une gorge (30) qui s'étend le long du passage (14) de l'élément de manoeuvre (10) en direction de passage.

9. Ensemble structurel selon la revendication 7 ou 8, **caractérisé en ce que** le contour extérieur de la lamelle (12) est fabriqué avec surépaisseur par rapport au contour intérieur de l'élément de manoeuvre.

10. Ensemble structurel selon l'une des revendications 7 à 9, **caractérisé en ce que** l'élément de manoeuvre est agencé sur la lamelle (12) de façon fixe dans les deux directions transversales à la direction longitudinale de la lamelle, et de façon mobile en translation guidée en direction longitudinale de la lamelle.
